# EUROPEAN PATENT APPLICATION

(11) **EP 4 592 938 A1**
(43) Date of publication of application: **30.07.2025**
(21) Application number: 23868038.3
(22) Date of filing: 05.09.2023
(51) Int. Cl.: G06T 1/00

(54) **DISPLAY CONTROL DEVICE, METHOD FOR OPERATING DISPLAY CONTROL DEVICE, AND PROGRAM FOR OPERATING DISPLAY CONTROL DEVICE**

(30) Priority: 20.09.2022 JP 2022149487
(71) Applicant: FUJIFILM Corporation, Tokyo 106-8620 (JP)
(72) Inventor: KAKU, Toshihiko, Saitama-shi, Saitama 331-9624 (JP)
(74) Representative: Meissner Bolte Partnerschaft mbB
(86) International application number: PCT/JP2023/032377
(87) International publication number: WO 2024/062914

(57) **Abstract**

Provided is a display control device that controls a list display of a plurality of images, the display control device including a processor, in which the processor is configured to receive an instruction from a user as to which of a first process of adjusting image quality of an image with relatively low image quality to image quality of an image with relatively high image quality, a second process of adjusting image quality of an image with relatively high image quality to image quality of an image with relatively low image quality, and a third process of adjusting image quality of the plurality of images to a target image quality is to be performed, and perform a process for which the instruction was received, among the first process, the second process, and the third process.

## Description

### BACKGROUND OF THE INVENTION

### 1. Field of the Invention

The technology of the present disclosure relates to a display control device, an operation method of a display control device, and an operation program of a display control device.

### 2. Description of the Related Art

JP2017-158757A discloses an image display apparatus comprising an image acquisition unit, a common region determination unit, a magnification ratio determination unit, and a display control unit. The image acquisition unit acquires a plurality of medical images. The common region determination unit determines a common region that exists in common among the plurality of medical images. The magnification ratio determination unit determines, for each of the plurality of medical images, a magnification ratio for displaying a plurality of common regions for the plurality of medical images in the same size. The display control unit applies the determined magnification ratio to the plurality of common regions, and displays images of the plurality of common regions after the application of the magnification ratio on a display unit. The image display apparatus further comprises an image processing unit that performs image processing for matching the image quality of the images in the plurality of common regions.

### SUMMARY OF THE INVENTION

One embodiment according to the technology of the present disclosure provides a display control device, an operation method of a display control device, and an operation program of a display control device that are capable of performing processing in accordance with a user's intentions in a case of adjusting the image quality of a plurality of images displayed in a list.

A display control device according to an aspect of the present disclosure is a display control device that controls a list display of a plurality of images, the display control device comprising: a processor, in which the processor is configured to: receive an instruction from a user as to which of a first process of adjusting image quality of an image with relatively low image quality to image quality of an image with relatively high image quality, a second process of adjusting image quality of an image with relatively high image quality to image quality of an image with relatively low image quality, and a third process of adjusting image quality of the plurality of images to a target image quality is to be performed; and perform a process for which the instruction was received, among the first process, the second process, and the third process.

It is preferable that the processor is configured to: calculate a numerical value representing the image quality for an image for which the process is to be performed; calculate a correction value for the image quality according to the numerical value; and perform image quality correction according to the correction value.

It is preferable that the processor is configured to: discriminate an acquisition source of an image for which the process is to be performed; and perform image quality correction according to the acquisition source. In this case, it is preferable that the processor is configured to discriminate the acquisition source by performing image processing on the image for which the process is to be performed.

It is preferable that the processor is configured to perform a process of applying a display effect applied to one of the plurality of images to the other images.

It is preferable that the processor is configured to perform a process of adding accessory information to the image that does not have accessory information.

It is preferable that the processor is configured to: search for a similar image of the image that does not have accessory information; and generate accessory information to be added to the image that does not have accessory information based on accessory information of the similar image.

It is preferable that the images include a first digital image which is a digital image obtained by digitizing an image printed out on an instant film, and a second digital image which is a printed digital image having a history of being printed out on the instant film.

An operation method according to another aspect of the present disclosure is an operation method of a display control device that controls a list display of a plurality of images, the operation method comprising: receiving an instruction from a user as to which of a first process of adjusting image quality of an image with relatively low image quality to image quality of an image with relatively high image quality, a second process of adjusting image quality of an image with relatively high image quality to image quality of an image with relatively low image quality, and a third process of adjusting image quality of the plurality of images to a target image quality is to be performed; and performing a process for which the instruction was received, among the first process, the second process, and the third process.

An operation program according to still another aspect of the present disclosure is an operation program of a display control device that controls a list display of a plurality of images, the operation program causing a computer to execute a process comprising: receiving an instruction from a user as to which of a first process of adjusting image quality of an image with relatively low image quality to image quality of an image with relatively high image quality, a second process of adjusting image quality of an image with relatively high image quality to image quality of an image with relatively low image quality, and a third process of adjusting image quality of the plurality of images to a target image quality is to be performed; and performing a process for which the instruction was received, among the first process, the second process, and the third process.

### BRIEF DESCRIPTION OF THE DRAWINGS

Fig. 1 is a diagram showing a user terminal and an image management server.
Fig. 2 is a diagram showing various images captured in the user terminal.
Fig. 3 is a table showing the image quality of various images captured in the user terminal.
Fig. 4 is a block diagram showing a computer that constitutes the user terminal and the image management server.
Fig. 5 is a block diagram showing a processing unit of a CPU of the user terminal.
Fig. 6 is a diagram showing a storage instruction screen.
Fig. 7 is a diagram showing an image playback display screen.
Fig. 8 is a diagram showing an image list display screen.
Fig. 9 is a diagram showing a list display image quality setting screen.
Fig. 10 is a diagram showing an outline of a first process.
Fig. 11 is a diagram showing an outline of a second process.
Fig. 12 is a diagram showing an outline of a third process.
Fig. 13 is a diagram showing a process of a browser control unit in a case in which a set button is pressed.
Fig. 14 is a block diagram showing a processing unit of a CPU of the image management server.
Fig. 15 is a diagram showing details of data stored in an image DB.
Fig. 16 is a diagram showing the processing of each processing unit of the image management server in a case in which an information storage request is transmitted from the user terminal.
Fig. 17 is a diagram showing a detailed configuration of an image quality correction unit.
Fig. 18 is a diagram showing a detailed configuration of a sharpness correction unit.
Fig. 19 is a flowchart showing a processing procedure of the user terminal.
Fig. 20 is a flowchart showing a processing procedure of the image management server.
Fig. 21 is a flowchart showing a processing procedure of the image management server.
Fig. 22 is a diagram for describing the effect of adjusting an image quality.
Fig. 23 is a diagram showing a detailed configuration of a sharpness correction unit according to a second embodiment.
Fig. 24 is a diagram showing an outline of a process in a learning phase of an acquisition source discrimination model.
Fig. 25 is a diagram showing a third embodiment of a process of applying a display effect applied to one of a plurality of images to the other images as well.
Fig. 26 is a diagram showing a fourth embodiment of a process of adding accessory information to an image that does not have accessory information.
Fig. 27 is a diagram showing the fourth embodiment of a process of adding accessory information to an image that does not have accessory information.

### DESCRIPTION OF THE PREFERRED EMBODIMENTS

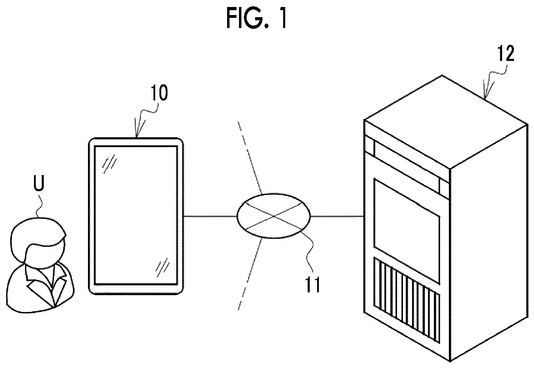

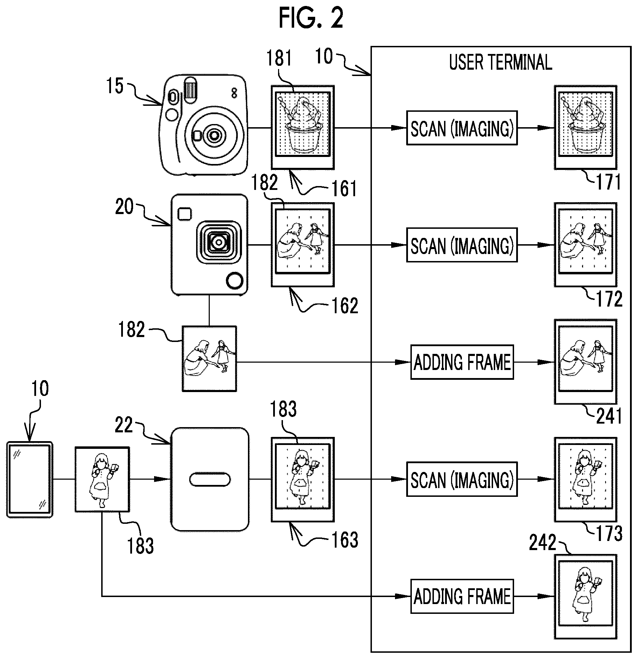

As an example, as shown in Fig. 1, a user owns a user terminal 10. The user terminal 10 is a device having a camera function, an image playback and display function, an image transmission and reception function, and the like. The camera function of the user terminal 10 has an imaging element such as a complementary metal-oxide-semiconductor (CMOS) image sensor, and obtains an image 183 of a subject (see Fig. 2) by focusing subject light captured through a lens on the imaging element. The camera function of the user terminal 10 has functions such as automatic exposure adjustment, automatic focus adjustment, and automatic white balance (hereinafter referred to as white balance (WB)) adjustment. Specifically, the user terminal 10 is a smartphone, a tablet terminal, a compact digital camera, a mirrorless single-lens camera, a notebook personal computer, or the like. The user terminal 10 is an example of a "display control device" according to the technology of the present disclosure.

The user terminal 10 is connected to an image management server 12 via a network 11 so that they can communicate with each other. The network 11 is, for example, a wide area network (WAN) such as the Internet or a public communication network. The user terminal 10 transmits (uploads) images to the image management server 12. In addition, the user terminal 10 receives (downloads) images from the image management server 12.

The image management server 12 is, for example, a server computer, a workstation, and the like, and together with the user terminal 10 is an example of a "display control device" according to the technology of the present disclosure. In this manner, the "display control device" according to the technology of the present disclosure may be realized across a plurality of devices. A plurality of user terminals 10 of a plurality of users U are connected to the image management server 12 via the network 11.

As an example, as shown in Fig. 2, various images are captured in the user terminal 10. Specifically, a first image is a scanned image 171 obtained by scanning an instant film 161 from an analog instant camera 15 by imaging the film using the camera function of the user terminal 10. An image 181 obtained by imaging a subject with the analog instant camera 15 is printed out on the instant film 161. Therefore, the scanned image 171 is a digital image obtained by digitizing the image 181 printed out on the instant film 161. That is, the scanned image 171 is an example of a "first digital image" according to the technology of the present disclosure.

The analog instant camera 15 does not have an imaging element such as a CMOS image sensor, and obtains an image 181 of a subject by focusing subject light captured through a lens on the instant film 161. The analog instant camera 15 does not have functions such as automatic exposure adjustment, automatic focus adjustment, and automatic WB adjustment.

A second image is a scanned image 172 obtained by scanning an instant film 162 from a digital instant camera 20 by imaging the film using the camera function of the user terminal 10. An image 182 obtained by imaging a subject with the digital instant camera 20 is printed out on the instant film 162. Therefore, the scanned image 172 is a digital image obtained by digitizing the image 182 printed out on the instant film 162. That is, like the scanned image 171, the scanned image 172 is an example of a "first digital image" according to the technology of the present disclosure.

Unlike the analog instant camera 15, the digital instant camera 20 has an imaging element such as a CMOS image sensor, and obtains an image 182 of a subject by focusing subject light captured through a lens on the imaging element. The digital instant camera 20 has functions such as automatic exposure adjustment, automatic focus adjustment, and automatic WB adjustment. The digital instant camera 20 is also connected to the user terminal 10 via short-range wireless communication such as Bluetooth (registered trademark) so that they can communicate with each other.

A third image is a scanned image 173 obtained by scanning an instant film 163 from a digital instant printer 22 by imaging the film using the camera function of the user terminal 10. The digital instant printer 22 is connected to the user terminal 10 via short-range wireless communication such as Bluetooth (registered trademark) so that they can communicate with each other. An image 183 obtained by imaging a subject using the camera function of the user terminal 10 is transmitted to the digital instant printer 22. The digital instant printer 22 prints out the image 183 on the instant film 163. Therefore, the scanned image 173 is a digital image obtained by digitizing the image 183 printed out on the instant film 163. That is, like the scanned images 171 and 172, the scanned image 173 is an example of a "first digital image" according to the technology of the present disclosure.

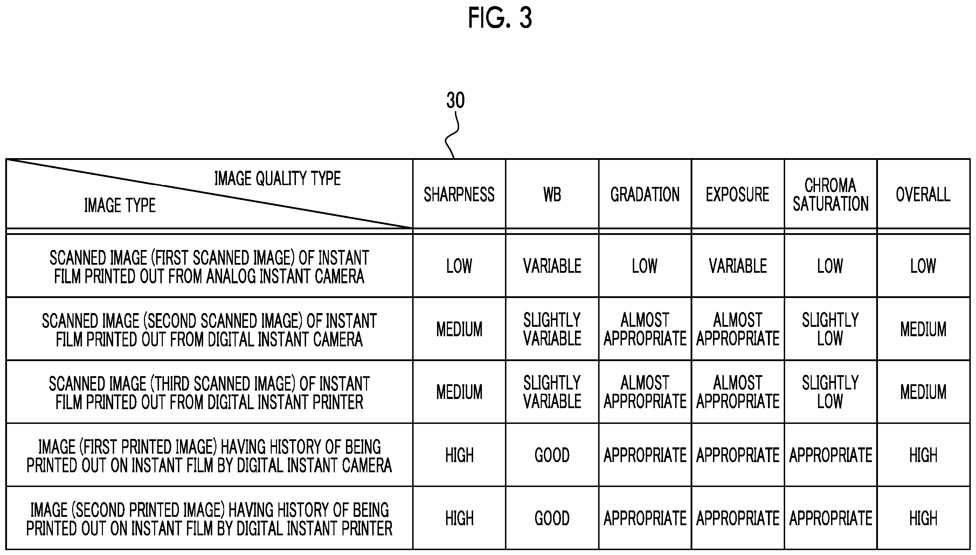

In the following, the scanned image 171 may be referred to as the first scanned image, the scanned image 172 may be referred to as the second scanned image, and the scanned image 173 may be referred to as the third scanned image, respectively (see Fig. 3 and the like). Moreover, in a case in which there is no need to particularly distinguish between the scanned images 171 to 173, they may be referred to as a scanned image 17. Similarly, in a case in which there is no need to particularly distinguish between the instant films 161 to 163 and the images 181 to 183, they may be referred to as an instant film 16 and an image 18. The instant film 16 may be of either a silver halide type or a thermal type.

A fourth image is a printed image 241 in which a frame resembling the instant film 162 is added to the image 182. The image 182 is an image obtained by imaging a subject with the digital instant camera 20, and is an image that has a history of being printed out on the instant film 162 by the digital instant camera 20. That is, the printed image 241 is an example of a "second digital image" according to the technology of the present disclosure.

A fifth image is an image 183 obtained by imaging a subject using the camera function of the user terminal 10, and is a printed image 242 in which a frame resembling the instant film 163 is added to the image 183 that has a history of being printed out on the instant film 163 by the digital instant printer 22. That is, like the printed image 241, the printed image 242 is an example of a "second digital image" according to the technology of the present disclosure. Hereinafter, the printed image 241 may be referred to as a first printed image, and the printed image 242 may be referred to as a second printed image, respectively (see Fig. 3 and the like). Furthermore, in a case in which there is no need to particularly distinguish between the printed images 241 and 242, they may be referred to as a printed image 24.

Here, since the same images are captured in the user terminal 10 as the printed images 241 and 242, there is no need to scan the scanned images 172 and 173. However, it is considered that the user U will randomly scan any instant film 16 without giving any particular consideration to whether an acquisition source of the instant film 16 is the analog instant camera 15, the digital instant camera 20, or the digital instant printer 22. Therefore, it is not surprising that the scanned images 172 and 173 are captured in the user terminal 10.

As an example, as shown in Table 30 of Fig. 3, various images captured in the user terminal 10 have different types of image quality. Specifically, the sharpness, gradation, and chroma saturation of the scanned image 171 are all "low", the WB and exposure are all "variable", the overall image quality taking into account the sharpness, WB, gradation, and the like, is "low". The scanned images 172 and 173 have a sharpness of "medium", a WB of "slightly variable", gradation and exposure of "almost appropriate", and a chroma saturation of "slightly low", resulting in an overall image quality of "medium". The printed images 241 and 242 have a sharpness of "high", a WB of "good", and gradation, exposure, and chroma saturation all of "appropriate", resulting in an overall image quality of "high". That is, among the various images captured in the user terminal 10, the scanned image 171 has the lowest image quality, the scanned images 172 and 173 have medium image quality, and the printed images 241 and 242 have the highest image quality. Strictly speaking, the image quality of the printed image 241 is slightly lower than that of the printed image 242, but for the sake of convenience, it is assumed that the image quality of the printed images 241 and 242 is the same.

The reason why the sharpness, gradation, and chroma saturation of the scanned image 171 are "low" is due to the characteristics of the instant film 161 and degradation caused by scanning. The reason why the WB of the scanned image 171 is "variable" is that the analog instant camera 15 does not have an automatic WB adjustment function, and the light source at the time of scanning is not fixed. Moreover, the reason why the exposure of the scanned image 171 is "variable" is that the analog instant camera 15 does not have an automatic exposure adjustment function.

The reason why the sharpness of the scanned images 172 and 173 is "medium" and the chroma saturation is "slightly low" is due to the characteristics of the instant films 162 and 163 and degradation caused by scanning. The reason why the WB of the scanned images 172 and 173 is "slightly variable" is that the light source at the time of scanning is not fixed.

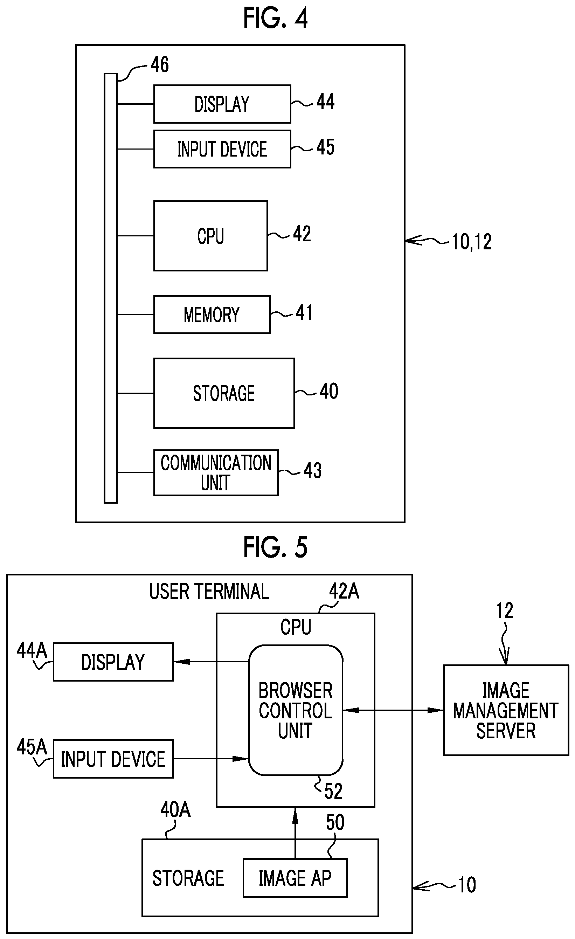

As an example, as shown in Fig. 4, the computers that constitute the user terminal 10 and the image management server 12 basically have the same configuration, and each comprise a storage 40, a memory 41, a central processing unit (CPU) 42, a communication unit 43, a display 44, and an input device 45. These components are connected to each other via a busline 46.

The storage 40 is a hard disk drive built into the computer that constitutes the user terminal 10 and the image management server 12 or connected via a cable or a network. Alternatively, the storage 40 is a disk array in which a plurality of hard disk drives are connected in series. The storage 40 stores a control program such as an operating system, various application programs (hereinafter abbreviated to AP (application program)), various types of data associated with these programs, and the like. A solid-state drive may be used instead of the hard disk drive.

The memory 41 is a work memory for the CPU 42 to execute processing. The CPU 42 loads the program stored in the storage 40 into the memory 41 and executes processing corresponding to the program. Thus, the CPU 42 integrally controls the respective units of the computer. The CPU 42 is an example of a "processor" according to the technology of the present disclosure. The memory 41 may be built into the CPU 42.

The communication unit 43 is a network interface for controlling transmission of various types of information via the network 11. The display 44 displays various screens. Various screens have operation functions by a graphical user interface (GUI). The computers that constitute the user terminal 10 and the image management server 12 receive inputs of operation instructions from the input device 45 via various screens. The input device 45 is a keyboard, a mouse, a touch panel, a microphone for voice input, or the like.

In the following description, the respective units of the computer that constitutes the user terminal 10 (the storage 40, CPU 42, the display 44, and the input device 45) are distinguished by adding the suffix "A" to their reference numerals, and the respective units of the computer that constitutes the image management server 12 (storage 40 and CPU 42) are distinguished by adding the suffix "B" to their reference numerals.

As an example, as shown in Fig. 5, an image AP 50 is stored in a storage 40A of the user terminal 10. The image AP 50 is installed in the user terminal 10 by the user U. The image AP 50 is an AP for causing a computer that constitutes the user terminal 10 to function as a "display control device" according to the technology of the present disclosure. That is, the image AP 50 is an example of an "operation program of a display control device" according to the technology of the present disclosure. In a case in which the image AP 50 is activated, a CPU 42A of the user terminal 10 functions as a browser control unit 52 in cooperation with the memory 41 and the like. The browser control unit 52 controls the operation of the dedicated web browser of the image AP 50.

The browser control unit 52 generates various screens. The browser control unit 52 displays the generated various screens on a display 44A. In addition, the browser control unit 52 receives various operation instructions input by the user U from an input device 45A via various screens. The browser control unit 52 transmits various requests to the image management server 12 in response to operation instructions.

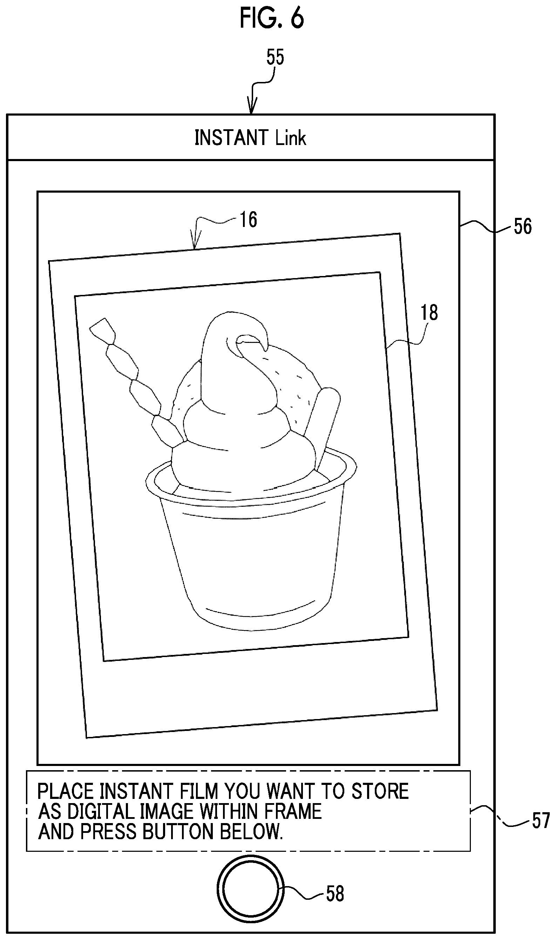

As an example, as shown in Fig. 6, in response to an instruction from the user U, the browser control unit 52 displays a storage instruction screen 55 on the display 44A. The storage instruction screen 55 is a screen for issuing a storage instruction to store the instant film 16 and the image 18 as a digital image. The storage instruction screen 55 displays a frame 56 for placing the instant film 16 to be stored as a digital image, a message 57, and a storage instruction button 58. The message 57 prompts the user U to place the instant film 16 that he/she wants to store as a digital image within the frame 56 and press the storage instruction button 58. The storage instruction button 58 functions as a kind of shutter button.

Following the message 57, the user U places the instant film 16 that he/she wants to store as a digital image within the frame 56, and presses the storage instruction button 58. In a case in which the storage instruction button 58 is pressed, the browser control unit 52 stores the instant film 16 as the scanned image 17 in the storage 40A. In addition, the browser control unit 52 transmits an instruction to store the scanned image 17 to the image management server 12, and causes the image management server 12 to store the scanned image 17.

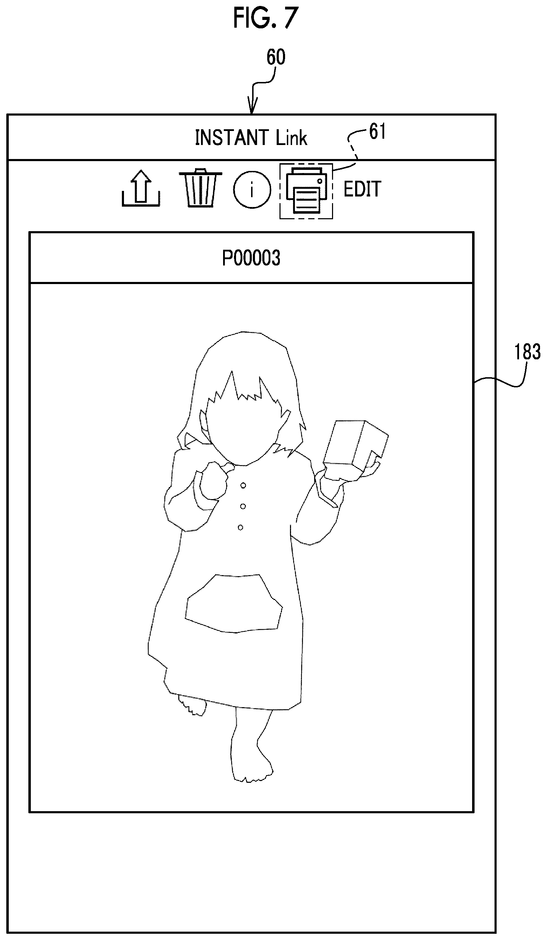

As an example, as shown in Fig. 7, the browser control unit 52 displays an image playback display screen 60 on the display 44A in response to an instruction from the user U. The image playback display screen 60 is a screen for playing back and displaying an image 183 obtained by imaging a subject using the camera function of the user terminal 10. The image playback display screen 60 is provided with a print button 61 for issuing an instruction to cause the digital instant printer 22 to print out the image 183 onto the instant film 163. In a case in which the print button 61 is pressed, the browser control unit 52 transmits the image 183 to the digital instant printer 22, and causes the image 183 to be printed out on the instant film 163. Furthermore, the browser control unit 52 adds a frame to the image 183 and stores the image 183 as a printed image 242 in the storage 40A. Furthermore, the browser control unit 52 transmits an instruction to store the printed image 242 to the image management server 12, and causes the image management server 12 to store the printed image 242.

Although not shown in the drawing, in a case in which the image 182 printed on the instant film 162 is transmitted from the digital instant camera 20, the browser control unit 52 adds a frame to the image 182 and stores the image 182 as a printed image 241 in the storage 40A. In addition, the browser control unit 52 transmits an instruction to store the printed image 241 to the image management server 12, and causes the image management server 12 to store the printed image 241.

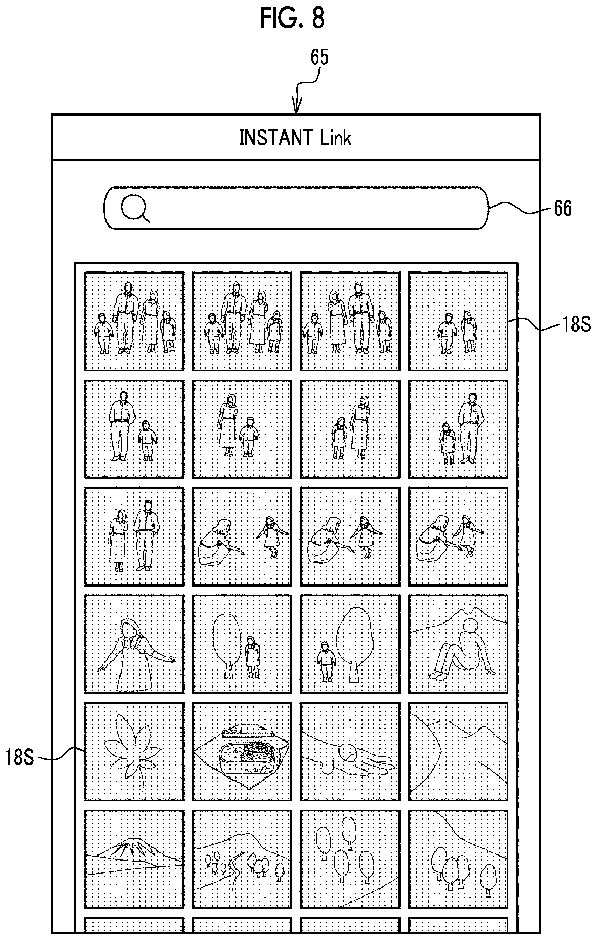

As an example, as shown in Fig. 8, the browser control unit 52 displays an image list display screen 65 on the display 44A in response to an instruction from the user U. On the image list display screen 65, thumbnail images 18S of the images 18 are displayed in a list. The image list display screen 65 is provided with a search bar 66. In the search bar 66, the user U inputs a search keyword for searching for a desired image 18. Search keywords that can be input include any word that describes the subject, such as the sea, mountains, dogs, or children; words that describe the imaging date and time, such as 2020, April, September 1, or night; or words that describe the imaging location, such as Kanagawa Prefecture, Toyama City, Mount Fuji, or Horyuji Temple.

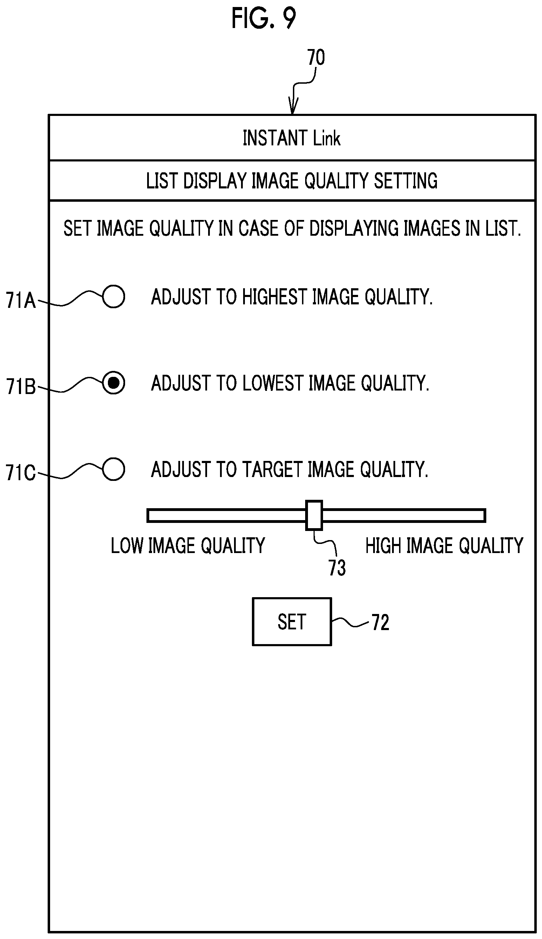

As an example, as shown in Fig. 9, the browser control unit 52 displays a list display image quality setting screen 70 on the display 44A before the image list display screen 65 is displayed for the first time. The list display image quality setting screen 70 is a screen for setting the image quality of the thumbnail images 18S of the image 18 displayed in a list on the image list display screen 65. The list display image quality setting screen 70 is provided with radio buttons 71A, 71B, and 71C and a set button 72. The list display image quality setting screen 70 can be displayed on the display 44A at any timing, not just before the image list display screen 65 is displayed for the first time.

The radio buttons 71A to 71C are a GUI that allows only one to be selected. The radio button 71A is a button for selecting a setting of adjusting the image quality of the scanned images 171 to 173 to the image quality of the printed images 241 and 242 (in Fig. 9, this is indicated as "Adjust to highest image quality"). The radio button 71B is a button for selecting a setting of adjusting the image quality of the scanned images 172 and 173 and the printed images 241 and 242 to the image quality of the scanned image 171 (in Fig. 9, this is indicated as "Adjust to lowest image quality"). The radio button 71C is a button for selecting a setting of adjusting the image quality of the scanned images 171 to 173 and the printed images 241 and 242 to a target image quality that is different from the image quality of the scanned image 171 and the image quality of the printed images 241 and 242 and is between the image quality of the scanned image 171 and the image quality of the printed images 241 and 242 (in Fig. 9, this is indicated as "Adjust to target image quality"). Here, "adjusting image quality" is not limited to a case of completely matching image quality, but is a concept that includes a case of keeping image quality within a preset range.

Below the radio button 71C, a setting bar 73 for setting a target image quality is provided. By moving the setting bar 73 to the left, the target image quality is set to a lower image quality. Moreover, by moving the setting bar 73 to the right, the target image quality is set to a higher image quality.

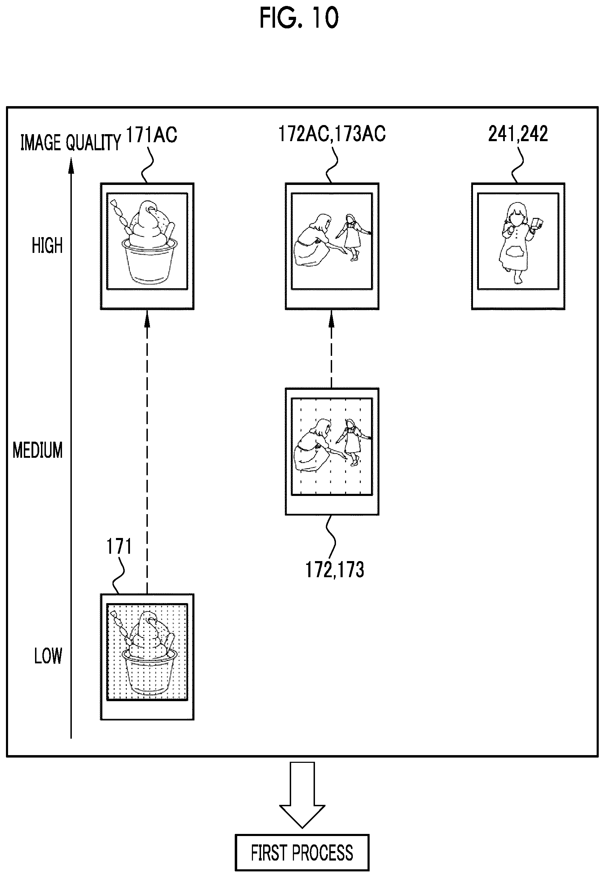

As an example, as shown in Fig. 10, the process set by the radio button 71A is a process of adjusting the image quality of the scanned images 171 to 173 to the image quality of the printed images 241 and 242, as described above. Through this process, the image quality of a corrected scanned image 171AC after the scanned image 171 has been subjected to image quality correction, a corrected scanned image 172AC after scanned image 172 has been subjected to image quality correction, and a corrected scanned image 173AC after the scanned image 173 has been subjected to image quality correction is adjusted to the image quality of the printed images 241 and 242.

According to the table shown in Fig. 3, the scanned images 171 to 173 have lower image quality than the printed images 241 and 242. In other words, the scanned images 171 to 173 are examples of "images with relatively low image quality" according to the technology of the present disclosure, and the printed images 241 and 242 are examples of "images with relatively high image quality" according to the technology of the present disclosure. Therefore, the process shown in Fig. 10 is an example of a "first process" according to the technology of the present disclosure. Hereinafter, the process shown in Fig. 10 and set by the radio button 71A will be referred to as a first process.

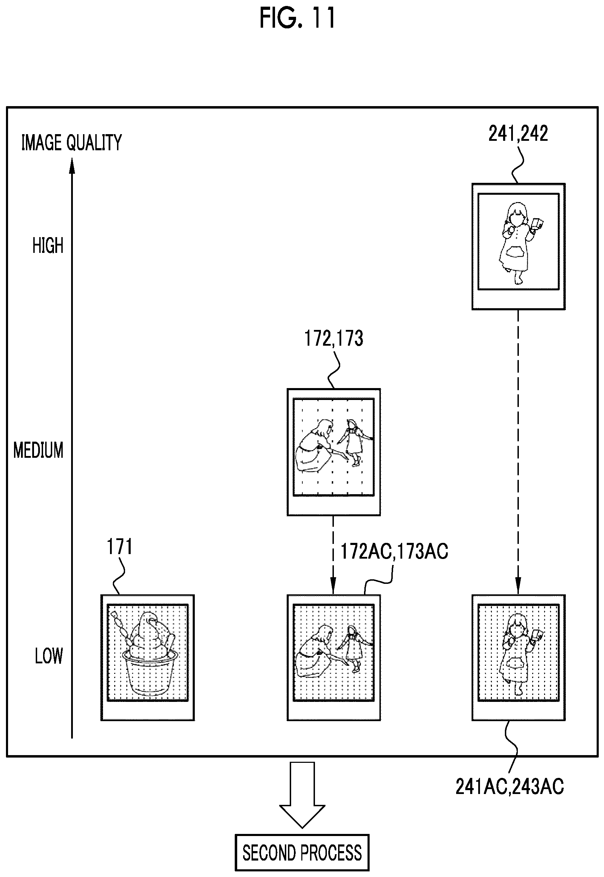

As an example, as shown in Fig. 11, the process set by the radio button 71B is a process of adjusting the image quality of the scanned images 172 and 173 and the printed images 241 and 242 to the image quality of the scanned image 171, as described above. Through this process, the image quality of a corrected scanned image 172AC after the scanned image 172 has been subjected to image quality correction, a corrected scanned image 173AC after scanned image 173 has been subjected to image quality correction, a corrected printed image 241AC after the printed image 241 has been subjected to image quality correction, and a corrected printed image 242AC after the printed image 242 has been subjected to image quality correction is adjusted to the image quality of the scanned image 171.

According to the table shown in Fig. 3, the scanned image 171 has lower image quality than the scanned images 172 and 173 and the printed images 241 and 242. In other words, the scanned image 171 is an example of an "image with relatively low image quality" according to the technology of the present disclosure, and the scanned images 172 and 173 and the printed images 241 and 242 are examples of "images with relatively high image quality" according to the technology of the present disclosure. Therefore, the process shown in Fig. 11 is an example of a "second process" according to the technology of the present disclosure. Hereinafter, the process shown in Fig. 11 and set by the radio button 71B will be referred to as a second process.

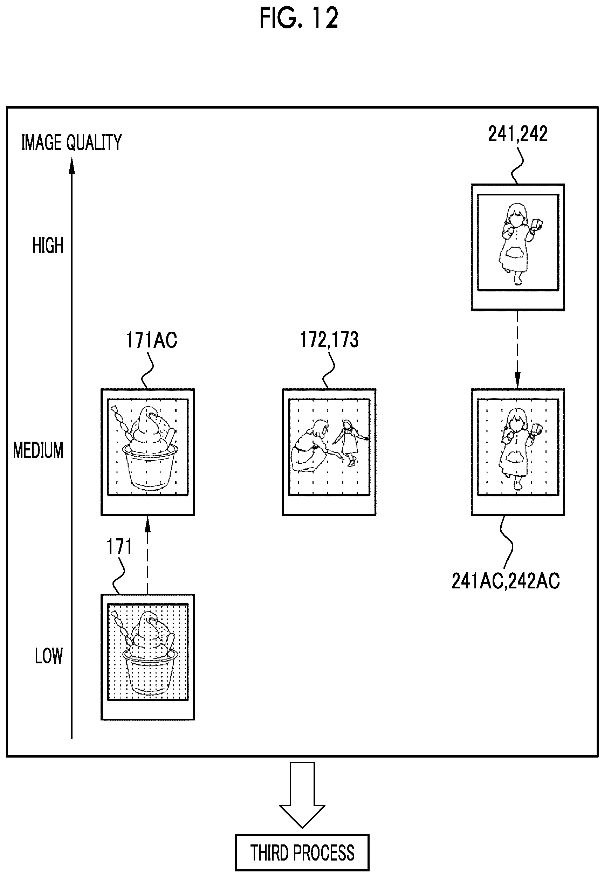

As an example, as shown in Fig. 12, the process set by the radio button 71C is a process of adjusting the image quality to the target image quality set by the setting bar 73, as described above. In Fig. 12, an image quality intermediate between the image quality of the scanned image 171 and the image quality of the printed images 241 and 242, which corresponds to the image quality of the scanned images 172 and 173, is illustrated as an example of the target image quality. Therefore, through this process, the image quality of the corrected scanned image 171AC after the scanned image 171 has been subjected to image quality correction, the corrected printed image 241AC after the printed image 241 has been subjected to image quality correction, and the corrected printed image 242AC after the printed image 242 has been subjected to image quality correction is adjusted to the image quality of the scanned images 172 and 173, which are target image quality. The process shown in Fig. 12 is an example of a "third process" according to the technology of the present disclosure. Hereinafter, the process shown in Fig. 12 and set by the radio button 71C will be referred to as a third process.

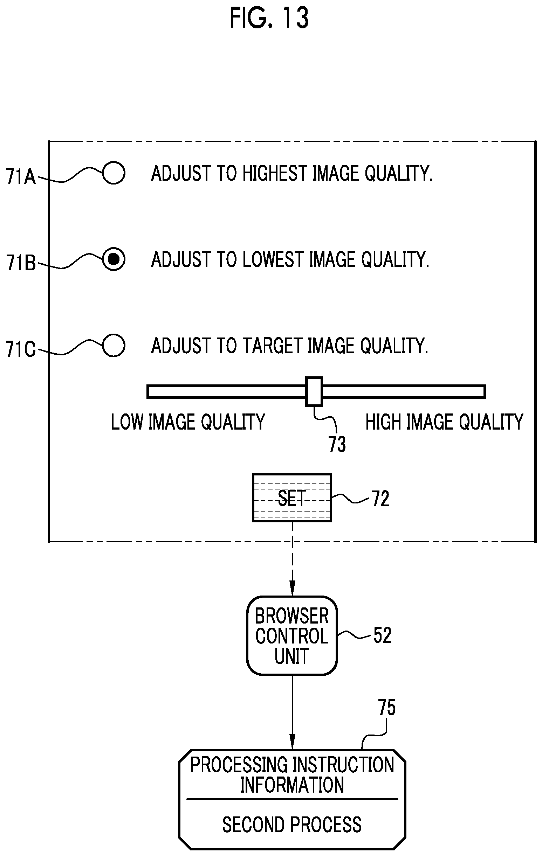

As an example, as shown in Fig. 13, in a case in which the set button 72 is pressed on the list display image quality setting screen 70, the browser control unit 52 generates processing instruction information 75. The processing instruction information 75 includes information on one of the first to third processes that can be set on the list display image quality setting screen 70 and that is alternatively selected by using the radio buttons 71A to 71C. Fig. 13 illustrates an example of a case in which the radio button 71B is selected and the second process is set. Although not shown in the drawing, in a case in which the radio button 71C is selected and the third process is set, the processing instruction information 75 includes information on the target image quality set by the setting bar 73.

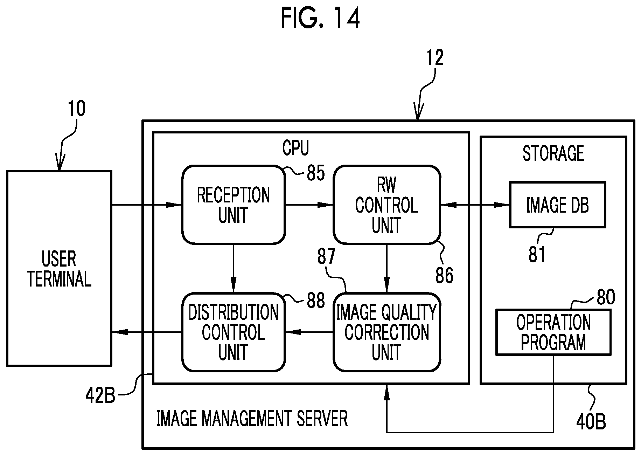

As an example, as shown in Fig. 14, an operation program 80 is stored in a storage 40B of the image management server 12. The operation program 80 is an AP for causing a computer that constitutes the image management server 12 to function as a "display control device" according to the technology of the present disclosure. That is, the operation program 80, like the image AP 50 is an example of an "operation program of a display control device" according to the technology of the present disclosure. The storage 40B also stores an image database (hereinafter referred to as DB (data base)) 81. In addition, although not shown in the drawing, the storage 40B stores a user identification data (ID) for uniquely identifying the user U, a password set by the user U, and a terminal ID for uniquely identifying the user terminal 10 as account information for the user U.

In a case in which the operation program 80 is activated, the CPU 42B of the image management server 12 cooperates with the memory 41 and the like to function as a reception unit 85, a read and write (hereinafter referred to as RW) control unit 86, an image quality correction unit 87, and a distribution control unit 88.

The reception unit 85 receives various requests from the user terminal 10. The reception unit 85 outputs various requests to the RW control unit 86 and the distribution control unit 88. The RW control unit 86 controls storage of various types of data in the storage 40B and reading out of various types of data from the storage 40B. The RW control unit 86 particularly controls the storage of the scanned image 17 and the printed image 24 in an image DB 81 and the reading out of the scanned image 17 and the printed image 24 from the image DB 81. The image quality correction unit 87 performs the process set on the list display image quality setting screen 70 among the first process, the second process, and the third process. The distribution control unit 88 controls the distribution of various types of data to the user terminal 10.

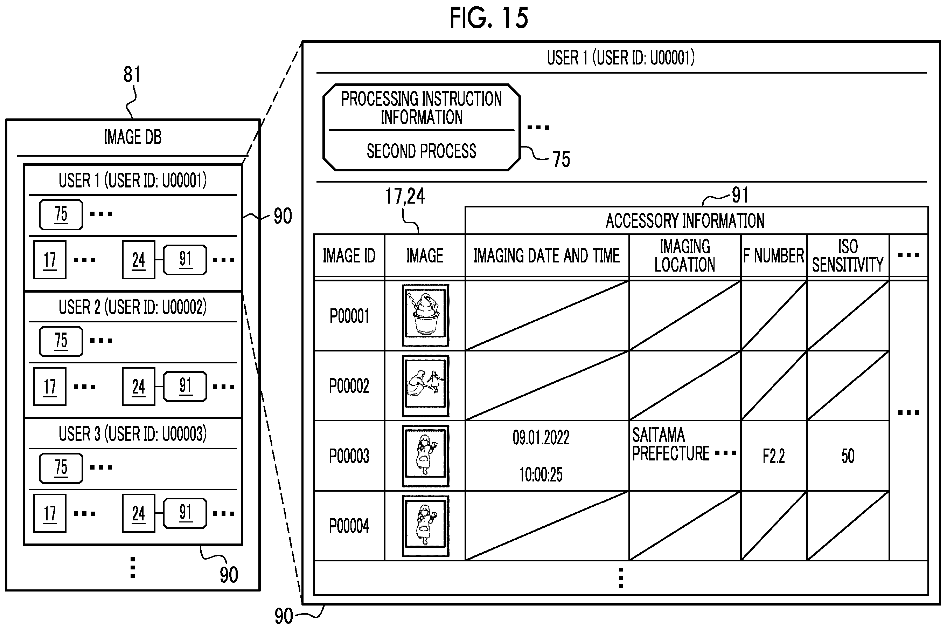

As an example, as shown in Fig. 15, the image DB 81 is provided with a storage area 90 for each user U. In the storage area 90, a user ID is registered, and various types of setting information set by the user U, including the processing instruction information 75, is also stored. Furthermore, the storage area 90 stores the scanned image 17 and the printed image 24.

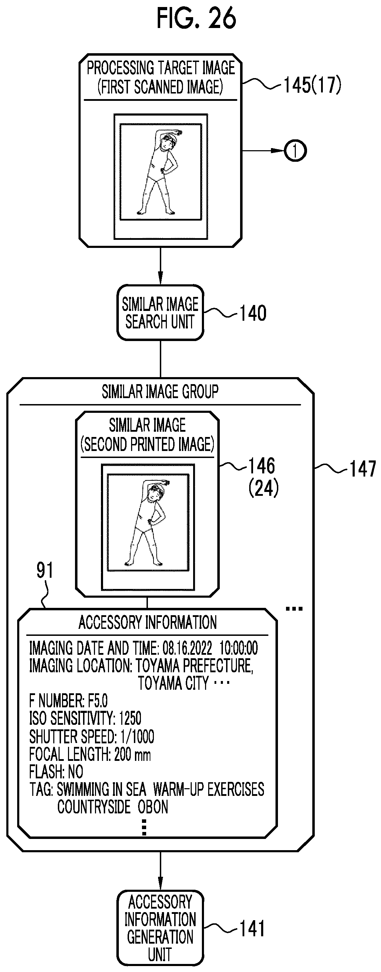

The printed image 24 is associated with accessory information 91. The accessory information 91 includes a plurality of items such as an imaging date and time, an imaging location, an F number, and international organization for standardization (ISO) sensitivity. The date and time when the image 18 of the printed image 24 was captured using the camera function of the user terminal 10 or the digital instant camera 20 is registered as the imaging date and time. The address and/or landmark name determined from longitude and latitude information obtained by the global positioning system (GPS) function of the user terminal 10 or digital instant camera 20 is registered as the imaging location. On the other hand, no accessory information 91 is associated with the scanned image 17. The items of the accessory information 91 include a shutter speed, a focal length, whether or not a flash was used, tags, and the like (see Fig. 26). A tag is a word that succinctly describes the subject shown in the image 18 of the printed image 24. The tags may be manually input by the user U or derived using image analysis software.

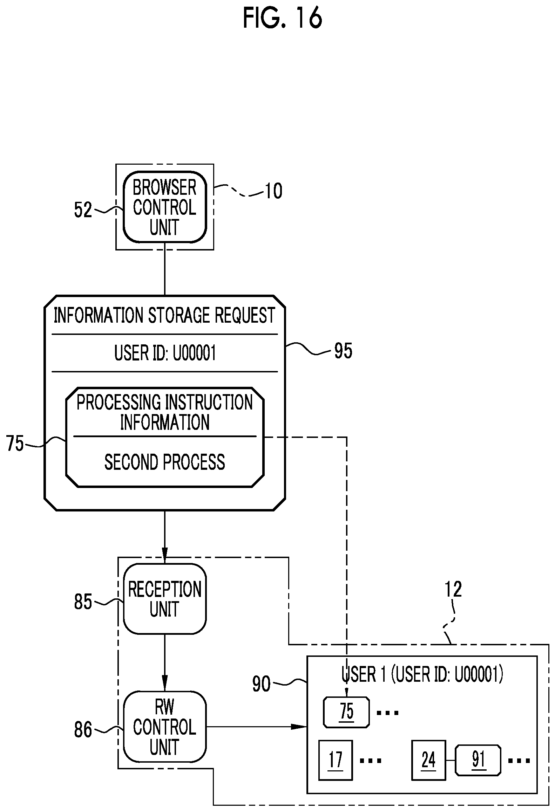

As an example, as shown in Fig. 16, in a case in which the set button 72 is pressed on the list display image quality setting screen 70, the browser control unit 52 generates processing instruction information 75 as shown in Fig. 13 and then transmits an information storage request 95 to the image management server 12. The information storage request 95 includes the user ID and the processing instruction information 75.

The reception unit 85 receives the information storage request 95 and outputs the information storage request 95 to the RW control unit 86. In response to the information storage request 95, the RW control unit 86 stores the processing instruction information 75 in the storage area 90 of the image DB 81 that corresponds to the user ID.

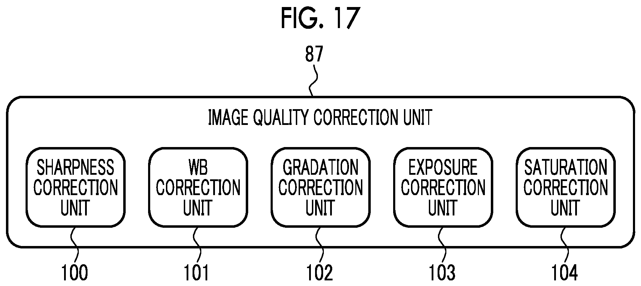

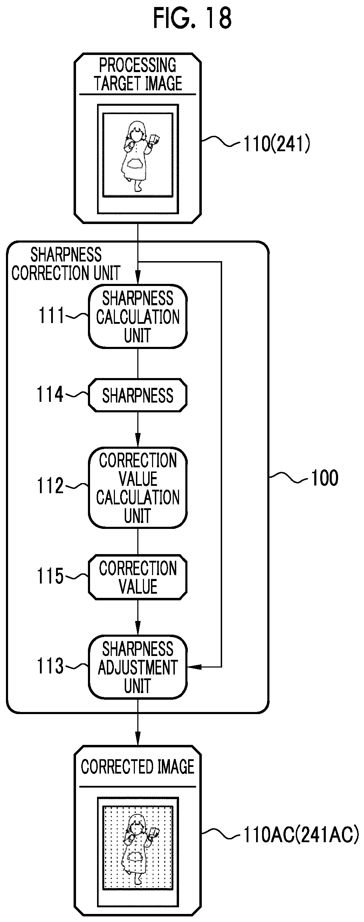

As an example, as shown in Fig. 17, the image quality correction unit 87 includes a sharpness correction unit 100, a WB correction unit 101, a gradation correction unit 102, an exposure correction unit 103, and a chroma saturation correction unit 104. The sharpness correction unit 100 performs a process of correcting the sharpness of an image (hereinafter referred to as a processing target image) 110 (see Fig. 18) that is an image for which the process is to be performed, which is registered in the processing instruction information 75, among the first process, the second process, and the third process. The WB correction unit 101 performs a process of correcting the WB of the processing target image 110. The gradation correction unit 102 performs a process of correcting the gradation of the processing target image 110. The exposure correction unit 103 performs a process of correcting the exposure of the processing target image 110. The chroma saturation correction unit 104 performs a process of correcting the chroma saturation of the processing target image 110.

The sharpness correction unit 100, the WB correction unit 101, the gradation correction unit 102, the exposure correction unit 103, and the chroma saturation correction unit 104 perform various corrections on the processing target image 110 in this order. Therefore, the image finally output from the image quality correction unit 87 is an image in which the sharpness, WB, gradation, exposure, and chroma saturation have all been corrected.

The processes performed by the sharpness correction unit 100, the WB correction unit 101, the gradation correction unit 102, the exposure correction unit 103, and the chroma saturation correction unit 104 are all roughly the same. Therefore, the following description will be given by taking the sharpness correction unit 100 as a representative example.

As an example, as shown in Fig. 18, the sharpness correction unit 100 includes a sharpness calculation unit 111, a correction value calculation unit 112, and a sharpness adjustment unit 113. The processing target image 110 is input to the sharpness calculation unit 111. The sharpness calculation unit 111 calculates sharpness 114 of the processing target image 110 using an image analysis technology or a machine learning model. The sharpness calculation unit 111 outputs the sharpness 114 to the correction value calculation unit 112. The sharpness 114 is an example of a "numerical value representing image quality" according to the technology of the present disclosure. In the case of the WB correction unit 101, the WB of the processing target image 110 is calculated as a "numerical value representing image quality" from the margin provided between the outer edge of the instant film 16 and the outer edge of the image 18.

The correction value calculation unit 112 calculates a correction value 115 that makes the sharpness 114 of the processing target image 110 a target sharpness. The correction value calculation unit 112 outputs the correction value 115 to the sharpness adjustment unit 113.

The target sharpness in the case of the first process is the sharpness of the printed images 241 and 242. The sharpness of the printed images 241 and 242 is, for example, the average value of the sharpness of all the printed images 241 and 242 stored in the storage area 90 of the image DB 81. The sharpness of the printed images 241 and 242 may be the sharpness of one printed image 24 designated by the user U among the printed images 241 and 242 stored in the storage area 90 of the image DB 81.

The target sharpness in the case of the second process is the sharpness of the scanned image 171. The sharpness of the scanned image 171 is, for example, the average value of the sharpness of all the scanned images 171 stored in the storage area 90 of the image DB 81. The sharpness of the scanned image 171 may be the sharpness of one scanned image 171 designated by the user U among the scanned images 171 stored in the storage area 90 of the image DB 81.

The target sharpness in the case of the third process is the sharpness according to the target image quality set by the setting bar 73.

The processing target image 110 is input to the sharpness adjustment unit 113. The sharpness adjustment unit 113 applies a correction value 115 to the processing target image 110 and adjusts the sharpness 114 of the processing target image 110 to a target sharpness, thereby converting the processing target image 110 into a corrected image 110AC. In Fig. 18, a printed image 241 is illustrated as the processing target image 110, and a corrected printed image 241AC is illustrated as the corrected image 110AC. Each of the correction units 100 to 104 of the image quality correction unit 87 corrects the image quality of the processing target image 110 in this manner, thereby performing the process for which the instruction was received, among the first process, the second process, and the third process.

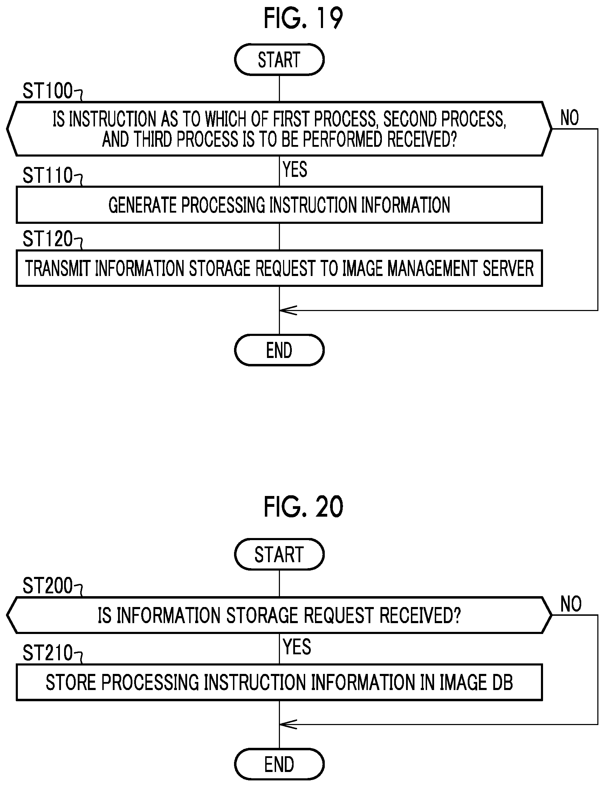

Next, the operation of the above configuration will be described with reference to the flowcharts shown in Figs. 19, 20, and 21 as an example. As shown in Fig. 5, the CPU 42A of the user terminal 10 functions as a browser control unit 52 in a case in which the image AP 50 is activated. As shown in Fig. 14, the CPU 42B of the image management server 12 functions as a reception unit 85, a RW control unit 86, an image quality correction unit 87, and a distribution control unit 88 in a case in which the operation program 80 is activated.

The user U issues an instruction as to which of the first process, the second process, and the third process is to be performed by operating the radio buttons 71A to 71C, the set button 72, and in some cases the setting bar 73 on the list display image quality setting screen 70 shown in Fig. 9. Accordingly, the browser control unit 52 receives an instruction as to which of the first process, the second process, and the third process is to be performed (YES in Step ST100 in Fig. 19). Next, as shown in Fig. 13, the browser control unit 52 generates the processing instruction information 75 (Step ST110). Then, as shown in Fig. 16, under the control of the browser control unit 52, an information storage request 95 including the processing instruction information 75 is transmitted to the image management server 12 (Step ST120).

In the image management server 12, the reception unit 85 receives the information storage request 95 (YES in Step ST200 in Fig. 20). The information storage request 95 is output from the reception unit 85 to the RW control unit 86. Then, under the control of the RW control unit 86, the processing instruction information 75 is stored in the image DB 81 (Step ST210).

The user U sends an instruction to display the image list display screen 65. Accordingly, under the control of the browser control unit 52, a distribution request for the scanned images 17 and the printed images 24 to be displayed in a list on the image list display screen 65 is transmitted to the image management server 12.

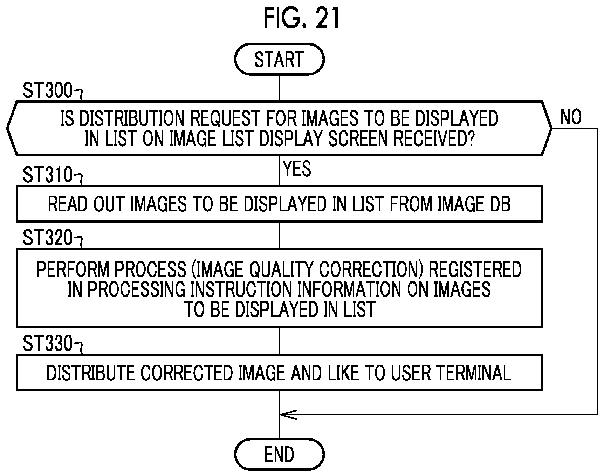

In the image management server 12, the reception unit 85 receives a distribution request for the scanned images 17 and the printed images 24 to be displayed in a list on the image list display screen 65 (YES in Step ST300 in Fig. 21). The distribution request is output from the reception unit 85 to the RW control unit 86. Then, under the control of the RW control unit 86, the scanned images 17 and the printed images 24 to be displayed in a list on the image list display screen 65 are read out from the image DB 81 (Step ST310). The processing target image 110 out of the scanned image 17 and the printed image 24 is output from the RW control unit 86 to the image quality correction unit 87. The images other than the processing target image 110 out of the scanned image 17 and the printed image 24 are output from the RW control unit 86 to the distribution control unit 88. The images other than the processing target image 110 are, for example, the printed images 241 and 242 in the case of the first process, and the scanned image 171 in the case of the second process.

As shown in Figs. 17 and 18, in the image quality correction unit 87, the process (image quality correction) registered in the processing instruction information 75 among the first process, the second process, and the third process is performed on the processing target image 110 from the RW control unit 86, and the processing target image 110 is made into a corrected image 110AC (Step ST320). The corrected image 110AC is output from the image quality correction unit 87 to the distribution control unit 88.

Under the control of the distribution control unit 88, the corrected image 110AC is distributed to the user terminal 10 that is a request source of the distribution request together with the images other than the processing target image 110 out of the scanned image 17 and the printed images 24 (Step ST330).

As described above, the browser control unit 52 of the CPU 42A of the user terminal 10 receives an instruction from the user U as to which of the first process, the second process, and the third process is to be performed. As shown in Fig. 10, the first process is a process of adjusting the image quality of the scanned images 171 to 173, which are images with relatively low image quality, to the image quality of the printed images 241 and 242, which are images with relatively high image quality. As shown in Fig. 11, the second process is a process of adjusting the image quality of the scanned images 172 and 173, which are images with relatively high image quality, and printed images 241 and 242, to the image quality of the scanned image 171, which is an image with relatively low image quality. The third process is a process of adjusting the image quality of a plurality of images to a target image quality, as shown in Fig. 12. The image quality correction unit 87 of the CPU 42B of the image management server 12 performs the process for which the instruction was received, among the first process, the second process, and the third process. Therefore, in a case of adjusting the image quality of a plurality of images displayed in a list, processing can be performed in accordance with the user U's intentions.

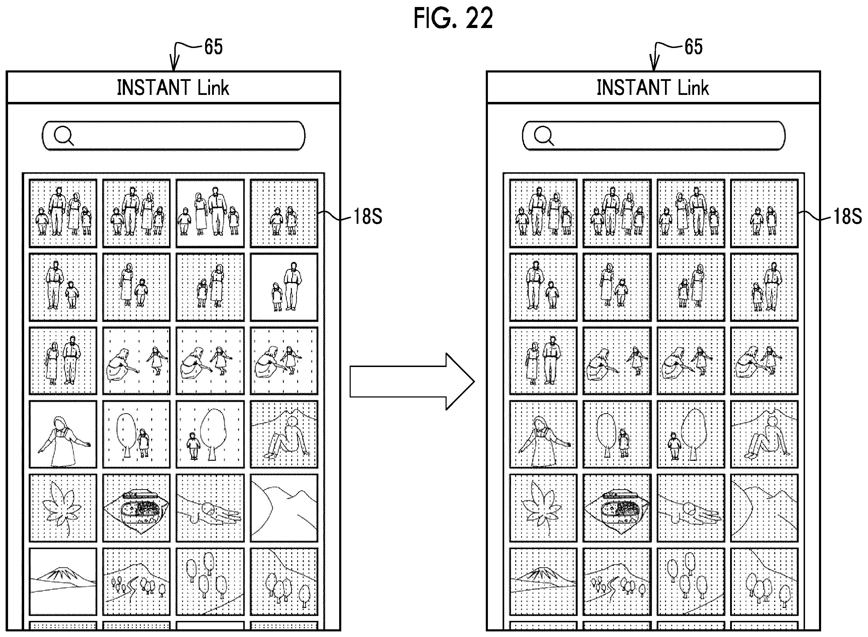

By adjusting the image quality of a plurality of images displayed in a list, a sense of unity is created in the display of thumbnail images 18S on the image list display screen 65, as shown to the right of the arrow in Fig. 22 as an example. Therefore, compared to a case in which the image quality of a plurality of images displayed as a list is not adjusted, as shown to the left of the arrow, the list display can be made clearer and easier to view.

As shown in Fig. 18, each of the correction units 100 to 104 of the image quality correction unit 87 calculates a numerical value such as sharpness 114 representing image quality for the processing target image 110, calculates a correction value 115 for the image quality according to the numerical value, and performs image quality correction according to the correction value 115. This makes it possible to easily correct image quality.

As shown in Fig. 2, the images include the scanned image 17 as a first digital image, which is a digital image obtained by digitizing the image 18 printed out on the instant film 16. The images also include the printed image 24 as a second digital image, which is a printed digital image having a history of being printed out on the instant film 16. Therefore, a list display limited to images related to the instant film 16 can be displayed.

Also, there are various images related to the instant film 16, and as shown in Fig. 3, they have different types of image quality. Therefore, the aspect including the scanned image 17 and the printed image 24 as images can be said to match the technology of the present disclosure, which receives an instruction from the user U as to which of the first process, the second process, and the third process is to be performed, and performs the process for which the instruction was received, among the first process, the second process, and the third process, thereby adjusting the image quality of the plurality of images displayed in a list.

### [Second Embodiment]

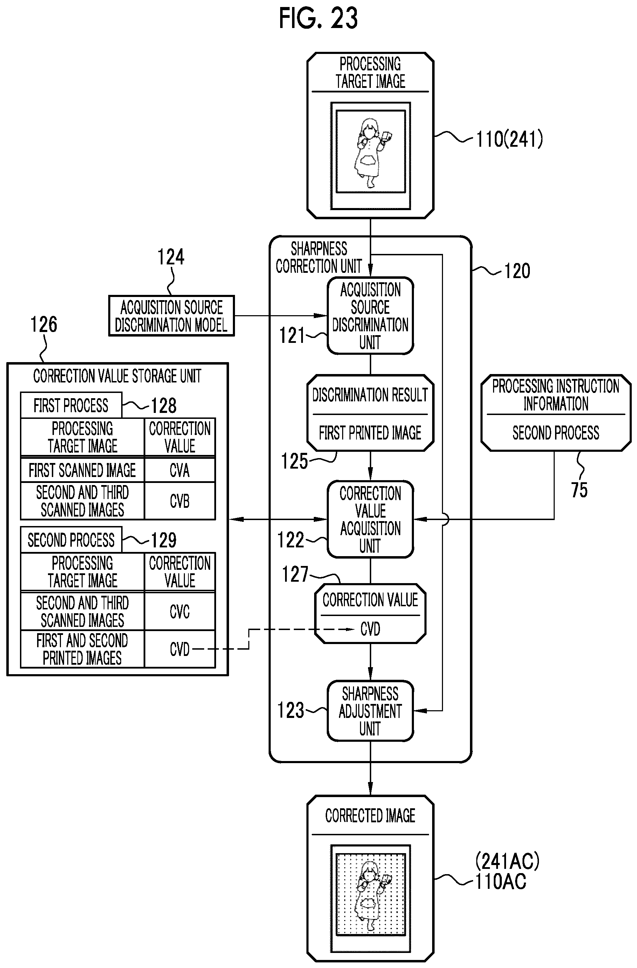

As an example, as shown in Fig. 23, a sharpness correction unit 120 of a second embodiment includes an acquisition source discrimination unit 121, a correction value acquisition unit 122, and a sharpness adjustment unit 123. The processing target image 110 is input to the acquisition source discrimination unit 121. The acquisition source discrimination unit 121 discriminates the acquisition source of the processing target image 110 by using an acquisition source discrimination model 124. Discriminating the acquisition source means discriminating whether the processing target image 110 is one of the scanned images 171 to 173 and the printed images 241 and 242.

The acquisition source discrimination model 124 is stored in the storage 40B. The RW control unit 86 reads out the acquisition source discrimination model 124 from the storage 40B, and outputs the acquisition source discrimination model 124 to the acquisition source discrimination unit 121. The acquisition source discrimination model 124 is a machine learning model that outputs a discrimination result 125 of the acquisition source of the processing target image 110 in response to an input of the processing target image 110. The acquisition source discrimination model 124 includes, for example, a convolutional neural network or the like. The acquisition source discrimination unit 121 outputs a discrimination result 125 to the correction value acquisition unit 122.

In addition to the discrimination result 125 from the acquisition source discrimination unit 121, the processing instruction information 75 is input to the correction value acquisition unit 122. The correction value acquisition unit 122 acquires a correction value 127 according to the processing instruction information 75 and the discrimination result 125 from a correction value storage unit 126. The correction value acquisition unit 122 outputs the correction value 127 to the sharpness adjustment unit 123.

The correction value storage unit 126 is stored in the storage 40B. As shown in table 128, the correction value storage unit 126 stores the correction value 127 for each processing target image 110 in the first process. Specifically, in a case in which the processing target image 110 is the scanned image 171 (first scanned image), CVA is stored as the correction value 127. Furthermore, in a case in which the processing target image 110 is the scanned images 172 and 173 (the second scanned image and the third scanned image), CVB is stored as the correction value 127.

Furthermore, as shown in table 129, the correction value storage unit 126 stores the correction value 127 for each processing target image 110 in the second process. Specifically, in a case in which the processing target image 110 is the scanned images 172 and 173 (the second scanned image and the third scanned image), CVC is stored as the correction value 127. Furthermore, in a case in which the processing target image 110 is the printed images 241 and 242 (the first printed image and the second printed image), CVD is stored as the correction value 127. Although not shown in the drawing, the correction value storage unit 126 stores, in addition to the correction value 127 for the sharpness, correction values for WB, gradation, exposure, and chroma saturation for each processing target image 110 in the first process and the second process.

The processing target image 110 is input to the sharpness adjustment unit 123. The sharpness adjustment unit 123 applies a correction value 127 to the processing target image 110 and adjusts the sharpness of the processing target image 110 to a target sharpness, thereby converting the processing target image 110 into a corrected image 110AC.

Fig. 23 illustrates an example of a case in which the process registered in the processing instruction information 75 is the second process, and the discrimination result 125 is the printed image 241 (the first printed image). Therefore, the correction value acquisition unit 122 acquires the CVD as the correction value 127.

In a case in which the process registered in the processing instruction information 75 is the third process, the sharpness of the processing target image 110 is corrected by the sharpness correction unit 100 of the first embodiment. As described in the first embodiment, correction units other than the sharpness correction unit 120, such as a WB correction unit and a chroma saturation correction unit, perform roughly the same process as the sharpness correction unit 120, and therefore will not be illustrated or described.

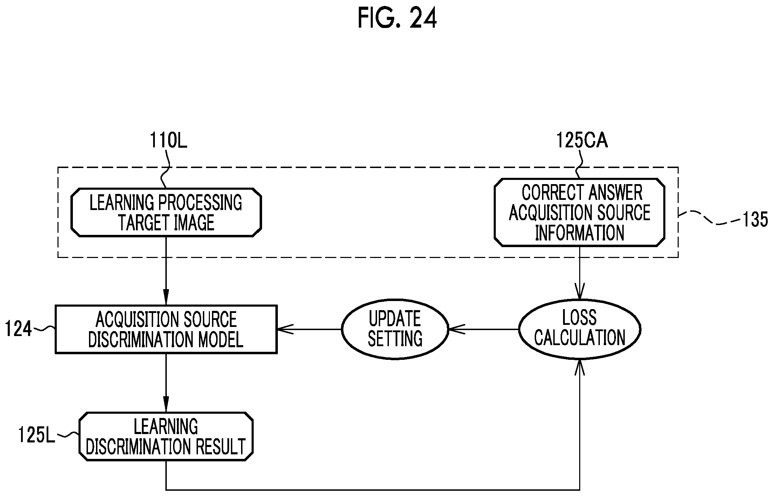

As an example, as shown in Fig. 24, in a learning phase of the acquisition source discrimination model 124, training data 135 is provided to the acquisition source discrimination model 124. The training data 135 is a set of a learning processing target image 110L and a correct answer acquisition source information 125CA.

In the learning phase, the learning processing target image 110L is input to the acquisition source discrimination model 124. The acquisition source discrimination model 124 outputs a learning discrimination result 125L in response to an input of the learning processing target image 110L. Based on the learning discrimination result 125L and the correct answer acquisition source information 125CA, a loss calculation is performed for the acquisition source discrimination model 124 using a loss function. Then, update setting for various coefficients of the acquisition source discrimination model 124 is performed according to the result of the loss calculation, and the acquisition source discrimination model 124 is updated according to the update setting.

In the learning phase, the above series of processes, including input of the learning processing target image 110L to the acquisition source discrimination model 124, output of the learning discrimination result 125L from the acquisition source discrimination model 124, loss calculation, update setting, and updating of the acquisition source discrimination model 124, are repeated while the training data 135 is exchanged. The repetition of the above series of processes is ended in a case in which the discrimination accuracy of the learning discrimination result 125L for the correct answer acquisition source information 125CA reaches a predetermined set level. The acquisition source discrimination model 124 whose discrimination accuracy has thus reached the set level is stored in the storage 40B and used by the acquisition source discrimination unit 121. Note that learning may be ended in a case in which the above series of processes have been repeated a set number of times, regardless of the discrimination accuracy of the learning discrimination result 125L for the correct answer acquisition source information 125CA.

In this way, in the second embodiment, an image quality correction unit such as the sharpness correction unit 120 discriminates the acquisition source of the processing target image 110. Then, image quality correction is performed on the processing target image 110 according to the acquisition source. Therefore, appropriate image quality correction can be performed simply by discriminating the acquisition source of the processing target image 110, without having to perform processing such as calculating a numerical value representing image quality and then calculating a correction value for the image quality according to the numerical value, as in the first embodiment described above.

The acquisition source discrimination unit 121 discriminates the acquisition source by performing image processing on the processing target image 110. Therefore, the acquisition source of the processing target image 110 can be easily discriminated without bothering the user U.

A more detailed acquisition source of the processing target image 110, such as model A, model B, ... of the analog instant camera 15, model A, model B, ... of the digital instant camera 20 may be discriminated, and correction values for each of the more detailed acquisition sources may be prepared. Furthermore, it is preferable to use learning processing target images 110L that show the same subject but are obtained from different acquisition sources as the training data 135, since this makes learning of the acquisition source discrimination model 124 more efficient.

Image quality correction may be performed on the scanned images 171 to 173 using the sharpness correction unit 120 or the like to eliminate the variation in image quality between the scanned images 171 to 173, and then image quality correction may be performed on the scanned images using the sharpness correction unit 100 or the like.

The image processing method for discriminating the acquisition source is not limited to the method using the acquisition source discrimination model 124 described above. For example, a method of discriminating the acquisition source from numerical values representing a plurality of types of image quality, such as sharpness and chroma saturation, may be used. Also, the acquisition source of the instant film 16 may be discriminated by reading and character-recognizing the model information printed on the instant film 16. Furthermore, the acquisition source of the information may be discriminated by acquiring information on the acquisition source manually input by the user U.

### [Third Embodiment]

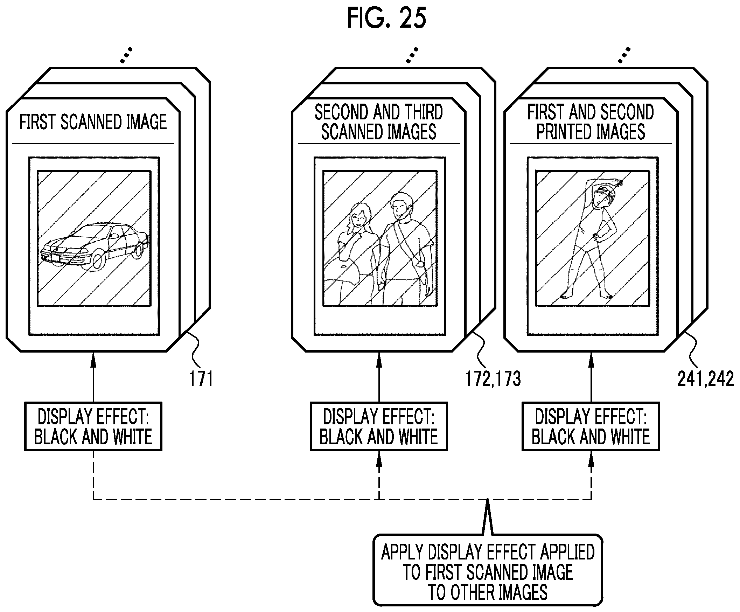

As an example, as shown in Fig. 25, an image quality correction unit of a third embodiment performs a process of applying a display effect that is applied to one of a plurality of images to the other images. Fig. 25 shows an example in which a black and white display effect applied to a scanned image 171 (first scanned image) is also applied to a scanned image 172 (second scanned image) and a scanned image 173 (third scanned image), and a printed image 241 (first printed image) and a printed image 242 (second printed image). In this manner, it is possible to perform a list display having a more sense of unity.

In addition, after a process of applying a display effect applied to one of a plurality of images to the other images has been performed, for an image for which a display effect has been newly set by the user U, a display effect that takes priority over the user U's settings is applied.

The user U may be allowed to select whether or not to perform a process of applying a display effect applied to one of a plurality of images to the other images.

Although the scanned image 171 is illustrated as one of the plurality of images, the present disclosure is not limited thereto. The scanned images 172 and 173 may be used or the printed images 241 and 242 may be used. Further, the display effects may be sepia, vivid, soft focus, light leak, whitening, and the like, in addition to the illustrated black and white.

### [Fourth embodiment]

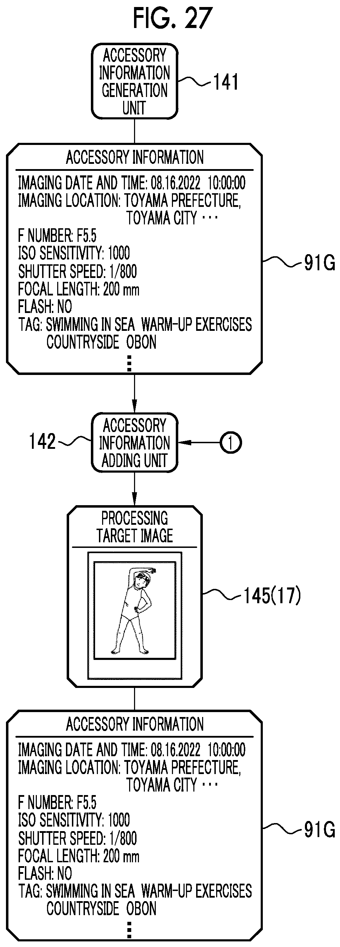

As an example, as shown in Figs. 26 and 27, the CPU 42B of the image management server 12 in a fourth embodiment functions as a similar image search unit 140, an accessory information generation unit 141, and an accessory information adding unit 142 in addition to each processing unit 85 to 88.

A processing target image 145 to which the accessory information 91 is to be added is input to the similar image search unit 140. The processing target image 145 is an image that does not have the accessory information 91 among the various images stored in the image DB 81, that is, the scanned image 17.

The similar image search unit 140 searches for a similar image 146 of the processing target image 145 from among the printed images 24 acquired by the same user U as the processing target image 145. The similar image search unit 140 calculates, for example, a plurality of types of image feature amounts of the processing target image 145. Then, a distance between the feature amount vector represented by the plurality of types of calculated image feature amounts and the feature amount vector represented by the plurality of types of image feature amounts of the printed image 24 stored in the image DB 81 is obtained. The similar image search unit 140 searches for the printed image 24 whose obtained distance is less than a preset threshold value, as a similar image 146. The similar image search unit 140 outputs a similar image group 147 including the searched-for similar images 146 to the accessory information generation unit 141. In a case in which no similar image 146 is searched for, the subsequent processing is stopped.

The accessory information generation unit 141 generates accessory information 91G to be added to the processing target image 145 based on the accessory information 91 of the similar image 146. The accessory information generation unit 141 outputs the accessory information 91G to the accessory information adding unit 142.

For items such as the imaging date and time, imaging location, flash, and tags, the accessory information generation unit 141 employs the data registered in the accessory information 91 of a representative similar image 146 (for example, the similar image 146 with the oldest imaging date and time) among the similar images 146 that constitute the similar image group 147 as the data for the accessory information 91G. On the other hand, for items such as the F number, ISO sensitivity, shutter speed, and focal length, the accessory information generation unit 141 employs the average value or most frequent value of the data registered in the accessory information 91 of the similar images 146 that constitute the similar image group 147 as data for the accessory information 91G. In a case in which only one similar image 146 is searched for, the accessory information generation unit 141 copies the accessory information 91 of the one similar image 146 as it is, and sets it as accessory information 91G.

In addition to the accessory information 91G from the accessory information generation unit 141, the processing target image 145 is input to the accessory information adding unit 142. The accessory information adding unit 142 adds accessory information 91G to the processing target image 145. The accessory information adding unit 142 outputs the processing target image 145 to which the accessory information 91G has been added to the RW control unit 86. The RW control unit 86 stores the processing target image 145 to which the accessory information 91G has been added in the image DB 81.

In this manner, in the fourth embodiment, the accessory information adding unit 142 performs a process of adding the accessory information 91G to the processing target image 145 (the scanned image 17) that does not have the accessory information 91. Therefore, the scanned image 17 that does not have the accessory information 91 can be treated in the same manner as the printed image 24 that has the accessory information 91. As a search result of an image search using the search bar 66 utilizing the accessory information 91, not only the printed image 24 but also the scanned image 17 can be output.

The similar image search unit 140 searches for a similar image 146 of a processing target image 145 that does not have accessory information 91. The accessory information generation unit 141 generates accessory information 91G to be added to the processing target image 145 that does not have accessory information 91 based on the accessory information 91 of the similar image 146. Therefore, it is possible to add plausible accessory information 91G to the processing target image 145.

In addition, images 182 captured by the camera function of the user terminal 10 may be added to the search targets for similar images 146. The timing for adding the accessory information 91 to an image that does not have the accessory information 91 may be a timing at which an instruction from the user U is received, or may be a periodical timing, such as once a month or once every six months. In addition, the accessory information 91 manually input by the user U may be added to the processing target image 145.

The images are not limited to the illustrated scanned images 171 to 173 and printed images 241 and 242. The device for imaging images, the device for printing images, and the medium for printing images are not limited to the analog instant camera 15, the digital instant camera 20, the digital instant printer 22, the instant film 16, and the like illustrated above as examples. For example, the image may be an image captured with a typical digital camera or an image downloaded from a web page. The image may also be a medical image such as a radiation image.

All or part of the functions of the browser control unit 52 of the user terminal 10 may be assigned to the image management server 12. Specifically, various screens such as the storage instruction screen 55 are generated in the image management server 12, and are distributed and output to the user terminal 10 in the format of screen data for web distribution created using a markup language such as Extensible Markup Language (XML), for example. In this case, the browser control unit 52 of the user terminal 10 reproduces various screens to be displayed on the web browser based on the screen data, and displays the various screens on the display 44A. In addition, instead of XML, other data description languages such as Javascript (registered trademark) Object Notation (JSON) may be used.

The hardware configuration of the computer that constitutes the image management server 12 can be modified in various ways. For example, the image management server 12 may be configured as hardware consisting of a plurality of separate computers in order to improve processing power and reliability. For example, the functions of the reception unit 85 and the RW control unit 86 and the functions of the image quality correction unit 87 and the distribution control unit 88 are distributed and assigned to two computers. In this case, the image management server 12 includes two computers. In addition, all or part of the functions of the image management server 12 may be assigned to the user terminal 10.

In this way, the hardware configuration of the computers of the user terminal 10 and image management server 12 can be changed as appropriate according to the required performance, such as processing power, safety, and reliability. Furthermore, not only the hardware but also APs such as the image AP 50 and the operation program 80 can be duplicated or stored in a distributed manner in a plurality of storage devices in order to ensure safety and reliability.

In each of the above embodiments, for example, the hardware structure of the processing unit that executes various processes, such as the browser control unit 52, the reception unit 85, the RW control unit 86, the image quality correction unit 87, the distribution control unit 88, the sharpness correction units 100 and 120, the WB correction unit 101, the gradation correction unit 102, the exposure correction unit 103, the chroma saturation correction unit 104, the sharpness calculation unit 111, the correction value calculation unit 112, the sharpness adjustment units 113 and 123, the acquisition source discrimination unit 121, the correction value acquisition unit 122, the similar image search unit 140, the accessory information generation unit 141, and the accessory information adding unit 142, can use the various processors shown below. The various processors include the CPUs 42A and 42B, which are general-purpose processors that execute software (the image AP 50 and the operation program 80) and function as various processing units, as well as a programmable logic device (PLD), which is a processor whose circuit configuration can be changed after manufacture, such as a field-programmable gate array (FPGA), and/or a dedicated electrical circuit, such as an application-specific integrated circuit (ASIC), which is a processor having a circuit configuration designed specifically to execute specific processes.

One processing unit may be configured by one of the various processors, or may be configured by a combination of the same or different types of two or more processors (for example, a combination of a plurality of FPGAs and/or a combination of a CPU and an FPGA). In addition, a plurality of processing units may be configured by one processor.

As an example where a plurality of processing units are configured by one processor, first, there is a form in which one processor is configured by a combination of one or more CPUs and software as typified by a computer, such as a client or a server, and this processor functions as a plurality of processing units. Second, as represented by a system-on-chip (SoC) or the like, there is a form of using a processor for realizing the function of the entire system including a plurality of processing units with one integrated circuit (IC) chip. In this way, various processing units are configured by one or more of the above-described various processors as hardware structures.

Furthermore, as the hardware structure of the various processors, more specifically, an electrical circuit (circuitry) in which circuit elements such as semiconductor elements are combined can be used.

From the above description, the technology described in the following supplementary notes can be understood.

### [Supplementary Note 1]

A display control device that controls a list display of a plurality of images, the display control device comprising:
a processor,
in which the processor is configured to:
   receive an instruction from a user as to which of a first process of adjusting image quality of an image with relatively low image quality to image quality of an image with relatively high image quality, a second process of adjusting image quality of an image with relatively high image quality to image quality of an image with relatively low image quality, and a third process of adjusting image quality of the plurality of images to a target image quality is to be performed; and
   perform a process for which the instruction was received, among the first process, the second process, and the third process.

### [Supplementary Note 2]

The display control device according to Supplementary Note 1,
in which the processor is configured to:
calculate a numerical value representing the image quality for an image for which the process is to be performed;
calculate a correction value for the image quality according to the numerical value; and
perform image quality correction according to the correction value.

### [Supplementary Note 3]

The display control device according to Supplementary Note 1 or 2,
in which the processor is configured to:
discriminate an acquisition source of an image for which the process is to be performed; and
perform image quality correction according to the acquisition source.

### [Supplementary Note 4]

The display control device according to Supplementary Note 3,
in which the processor is configured to discriminate the acquisition source by performing image processing on the image for which the process is to be performed.

### [Supplementary Note 5]

The display control device according to any one of Supplementary Notes 1 to 4,
in which the processor is configured to perform a process of applying a display effect applied to one of the plurality of images to the other images.

### [Supplementary Note 6]

The display control device according to any one of Supplementary Notes 1 to 5,
in which the processor is configured to perform a process of adding accessory information to the image that does not have accessory information.

### [Supplementary Note 7]

The display control device according to Supplementary Note 6,
in which the processor is configured to:
search for a similar image of the image that does not have accessory information; and
generate accessory information to be added to the image that does not have accessory information based on accessory information of the similar image.

### [Supplementary Note 8]

The display control device according to any one of Supplementary Notes 1 to 7,
in which the images include
a first digital image which is a digital image obtained by digitizing an image printed out on an instant film, and
a second digital image which is a printed digital image having a history of being printed out on the instant film.

In the technology of the present disclosure, the above-described various embodiments and/or various modification examples may be combined with each other as appropriate. In addition, the present disclosure is not limited to each of the above-described embodiments, and various configurations can be used without departing from the gist of the present disclosure. Furthermore, the technology of the present disclosure extends to a storage medium that non-transitorily stores a program, in addition to the program.

The described contents and illustrated contents shown above are detailed descriptions of the parts related to the technology of the present disclosure, and are merely an example of the technology of the present disclosure. For example, the above description of the configuration, function, operation, and effect is an example of the configuration, function, operation, and effect of the parts according to the technology of the present disclosure. Therefore, it goes without saying that unnecessary parts may be deleted, new elements may be added, or replacements may be made to the described contents and illustrated contents shown above within a range that does not deviate from the gist of the technology of the present disclosure. Further, in order to avoid complications and facilitate understanding of the parts related to the technology of the present disclosure, descriptions of common general knowledge and the like that do not require special descriptions for enabling the implementation according to the technology of the present disclosure are omitted, in the described contents and illustrated contents shown above.

In the present specification, the term "A and/or B" is synonymous with the term "at least one of A or B". That is, the term "A and/or B" means that it may be only A, it may be only B, or it may be a combination of A and B. In addition, in the present specification, the same approach as "A and/or B" is applied to a case in which three or more matters are represented by connecting the matters with "and/or".

All documents, patent applications, and technical standards described in the present specification are incorporated in the present specification by reference to the same extent as in a case in which each of the documents, patent applications, technical standards are specifically and individually indicated to be incorporated by reference.

## Claims

1. A display control device that controls a list display of a plurality of images, the display control device comprising:
a processor,
wherein the processor is configured to:
receive an instruction from a user as to which of a first process of adjusting image quality of an image with relatively low image quality to image quality of an image with relatively high image quality, a second process of adjusting image quality of an image with relatively high image quality to image quality of an image with relatively low image quality, and a third process of adjusting image quality of the plurality of images to a target image quality is to be performed; and
perform a process for which the instruction was received, among the first process, the second process, and the third process.

2. The display control device according to claim **1,**
wherein the processor is configured to:
calculate a numerical value representing the image quality for an image for which the process is to be performed;
calculate a correction value for the image quality according to the numerical value; and
perform image quality correction according to the correction value.

3. The display control device according to claim **1,**
wherein the processor is configured to:
discriminate an acquisition source of an image for which the process is to be performed; and
perform image quality correction according to the acquisition source.

4. The display control device according to claim 3,
wherein the processor is configured to discriminate the acquisition source by performing image processing on the image for which the process is to be performed.

5. The display control device according to claim **1,**
wherein the processor is configured to perform a process of applying a display effect applied to one of the plurality of images to the other images.

6. The display control device according to claim 1,
wherein the processor is configured to perform a process of adding accessory information to the image that does not have accessory information.

7. The display control device according to claim 6,
wherein the processor is configured to:
search for a similar image of the image that does not have accessory information; and
generate accessory information to be added to the image that does not have accessory information based on accessory information of the similar image.

8. The display control device according to claim 1,
wherein the images include
a first digital image which is a digital image obtained by digitizing an image printed out on an instant film, and
a second digital image which is a printed digital image having a history of being printed out on the instant film.

9. An operation method of a display control device that controls a list display of a plurality of images, the operation method comprising:
receiving an instruction from a user as to which of a first process of adjusting image quality of an image with relatively low image quality to image quality of an image with relatively high image quality, a second process of adjusting image quality of an image with relatively high image quality to image quality of an image with relatively low image quality, and a third process of adjusting image quality of the plurality of images to a target image quality is to be performed; and
performing a process for which the instruction was received, among the first process, the second process, and the third process.

10. An operation program of a display control device that controls a list display of a plurality of images, the operation program causing a computer to execute a process comprising:
receiving an instruction from a user as to which of a first process of adjusting image quality of an image with relatively low image quality to image quality of an image with relatively high image quality, a second process of adjusting image quality of an image with relatively high image quality to image quality of an image with relatively low image quality, and a third process of adjusting image quality of the plurality of images to a target image quality is to be performed; and
performing a process for which the instruction was received, among the first process, the second process, and the third process.
